# DEMANDE DE BREVET EUROPEEN

(11) **EP 0 726 432 A2**
(43) Date de publication de la demande: **14.08.1996**
(21) Numéro de dépôt: 96400250.5
(22) Date de dépôt: 06.02.1996
(51) Int. Cl.: F25B 17/00, F28D 20/00

(54) **Echangeur de chaleur diphasique à température contrôlée**

(30) Priorité: 07.02.1995 FR 9501395
(71) Demandeur: ELF AQUITAINE, F-92400 Courbevoie (FR)
(72) Inventeur: Spinner, Bernard, F-66200 Corneilla del Vercol (FR); Neveu, Pierre, F-66300 Saint Jean Lasseilles (FR); Mazet, Nathalie, F-66200 Corneilla del Vercol (FR)
(74) Mandataire: Timoney, Ian Charles Craig

(57) **Abrégé**

Echangeur de chaleur diphasique à température contrôlée destiné à échanger des calories avec une enceinte (14), l'échangeur comprenant une chambre (12;134;141) contenant un milieu sorbant d'un gaz et en contact thermique avec l'enceinte, la chambre étant sélectivement connectable à un siège d'une évaporation ou d'une condensation du gaz.

## Description

La présente invention se rapporte à un échangeur de chaleur diphasique à température contrôlée, et, plus particulièrement à un tel échangeur destiné à transférer de la chaleur vers ou depuis le siège d'une sorption solide, par exemple l'adsorption d'un gaz sur un solide, ou une réaction chimique entre un gaz et un solide.

Il existe plusieurs types d'échangeur de chaleur dont le plus répandu est celui formé d'un conduit dans lequel circule un fluide caloporteur. Ce conduit est généralement disposé dans une enceinte à chauffer ou à refroidir, le fluide caloporteur échangeant des calories avec l'enceinte lors de son passage à travers celle-ci. Cependant, compte tenu de l'échange de calories qui a lieu dans l'enceinte, la température d'entrée du fluide dans l'enceinte n'est pas égale à sa température de sortie. Ainsi, inéluctablement, il se créée un gradient de température à travers l'enceinte.

Dans certains domaines d'applications, il est souhaitable de réaliser un échange de chaleur avec l'enceinte à une température qui reste constante à travers l'enceinte. Pour ce faire, il est connu d'utiliser des caloducs qui sont le siège d'une évaporation ou d'une condensation monovariante et de ce fait présentent à l'échange une surface à température uniforme. Dans un caloduc, la température de condensation à une extrémité, pour des conditions d'échange données, est fonction uniquement de la température d'évaporation à l'autre extrémité qui, elle, dépend de la température d'amenée de chaleur. Les deux extrémités sont séparées par une zone adiabatique.

Si l'on cherche à modifier la température de l'échangeur de chaleur, que ce soit à fluide caloporteur ou à caloduc, il est nécessaire de modifier la température d'entrée du fluide, ou celle de l'amenée de chaleur au caloduc. Les sources de chaleur qui sont généralement utilisées sont adaptées à maintenir une température constante, mais elles permettent difficilement de faire varier la température avec précision.

La présente invention a donc pour objet un échangeur de chaleur qui permet un échange, à température constante, avec une enceinte et qui permet, de plus, de faire varier sélectivement la température d'échange sans avoir recours à une source de chaleur à température variable.

Pour ce faire, l'invention propose un échangeur de chaleur destiné à échanger des calories avec une enceinte, l'échangeur comprenant une chambre contenant un milieu sorbant d'un gaz et en contact thermique avec l'enceinte, la chambre étant sélectivement connectable à un siège d'une évaporation ou d'une condensation du gaz.

Le milieu sorbant peut comprendre un solide adsorbant ou un liquide absorbant.

L'invention trouve une application particulière dans le domaine des systèmes thermochimiques à base de sorption entre un solide et un gaz. Dans ce type de sorption solide à base de la réaction entre un solide et un gaz par exemple, une réaction réversible a lieu entre un sel et un gaz typiquement de l'ammoniac, laquelle réaction est exothermique dans un sens et endothermique dans l'autre. Le sel est disposé dans un bloc d'un support poreux, bon conducteur thermique, qui peut comprendre du graphite expansé recomprimé. Un échangeur de chaleur est disposé au voisinage du bloc de réactif afin d'y apporter ou d'en extraire des calories pendant les phases de la réaction chimique.

Dans de tels systèmes thermochimiques, la vitesse de la sorption solide-gaz est fonction de la différence de température entre le sel et l'échangeur de chaleur. L'utilisation d'un échangeur dans lequel circule un fluide caloporteur, où la température d'entrée dans le réactif est supérieure à celle de sortie, a pour résultat que le réactif avoisinant l'entrée du fluide réagit plus rapidement que celui qui se trouve vers la sortie du fluide. Ainsi, compte tenu de la température décroissante du fluide caloporteur lors de son passage à travers le réactif, il se créée un front progressif d'avancement de la réaction chimique à travers le réactif, et cela, dans le sens d'écoulement du fluide caloporteur.

L'utilisation d'un caloduc disposé dans le réactif permet de pallier ces inconvénients puisque la température est constante le long de la zone de changement de phase du fluide. Cependant, comme il a été décrit ci-dessus, il est nécessaire de varier la température d'évaporation du liquide afin de pouvoir faire varier la température de condensation dans l'extrémité du caloduc disposée dans le réactif.

L'extraction de chaleur, d'un bloc de réactif en phase exothermique, par un caloduc conduit au même problème. Le caloduc extrayant la chaleur par une évaporation en contact avec le réactif et une condensation dans la partie supérieure du caloduc.

L'échangeur de chaleur selon l'invention présente l'avantage de pouvoir fournir des calories à un bloc de réactif ou extraire des calories de ce bloc à une température qui est constante à travers le réactif mais que l'on peut faire varier sélectivement et facilement par exemple, afin de tenir compte de l'avancement de la réaction. L'utilisation d'un tel échangeur permet, donc, d'éviter le problème d'un front progressif de réaction à travers le réactif.

D'autres caractéristiques et avantages de la présente invention ressortiront à la lecture de la description suivante, donnée à titre explicatif mais non limitatif, faite en relation avec les dessins annexés, sur lesquels :
- la figure 1 est une vue schématique d'un échangeur de chaleur diphasique selon un premier mode de réalisation de l'invention ;
- la figure 2 est un diagramme de Clapeyron illustrant le fonctionnement de l'échangeur de la figure 1 ;
- la figure 3 est une vue schématique d'un échangeur analogue à celui de la figure 1 ;
- la figure 4 est un diagramme de Clapeyron analogue à celui de la figure 2.
- la figure 5 est une vue schématique d'un échangeur selon un autre mode de réalisation ;
- les figures 6, 7 et 8 sont des diagrammes de Clapeyron illustrant le fonctionnement de l'échangeur de la figure 5 ;
- la figure 9 est une vue schématique d'un système thermochimique selon un autre mode de réalisation de l'invention ;
- la figure 10 est un diagramme de Clapeyron illustrant le fonctionnement du système de la figure 9 ; et
- la figure 11 est une vue schématique d'un échangeur de chaleur selon un autre mode de réalisation de l'invention.

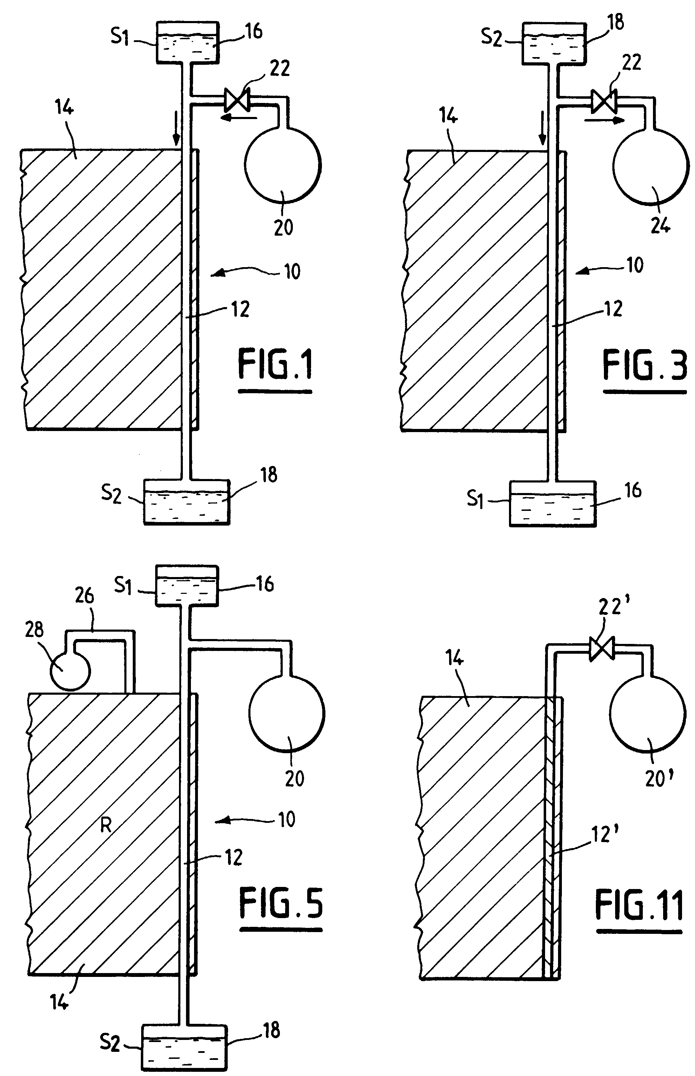

Comme représenté sur la figure 1, un échangeur de chaleur 10 comprend un conduit 12 disposé dans une enceinte 14 afin de pouvoir échanger des calories avec celle-ci. L'échangeur comprend, de plus, un premier réservoir 16 de liquide absorbant disposé à l'extrémité supérieure du conduit 12 et un deuxième réservoir 18 de liquide absorbant disposé à l'extrémité inférieure du conduit 12. Un évaporateur/condenseur 20 peut être mis sélectivement en communication avec le conduit 12 par l'intermédiaire d'une vanne 22.

Le fonctionnement de l'échangeur objet de l'invention sera maintenant décrit en prenant l'exemple d'une utilisation où il est nécessaire d'avoir une température d'échange avec l'enceinte qui est initialement élevée, puis moindre ensuite, et cela tout en maintenant la température d'échange constante à travers l'enceinte.

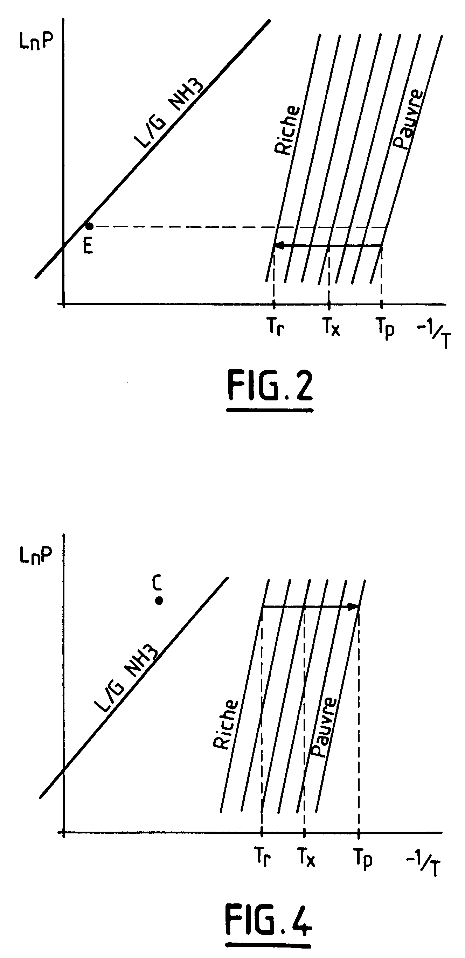

Dans cet exemple, le premier réservoir 1 contient une solution S₁ de H₂O-NH₃ (NH₄OH) ayant une faible teneur en NH₃. Cette solution s'écoule le long du conduit 12, vers le deuxième réservoir 18. Ainsi, le conduit 12 forme une chambre contenant un milieu sorbant d'un gaz. L'évaporateur 20 contient de l'ammoniac liquide. Lors de l'ouverture de la vanne 22, de l'ammoniac s'évapore et passe vers le conduit 12 où il est absorbé par la solution de H₂O-NH. Cette absorption est exothermique mais divariante : elle s'effectue à température décroissante. Ainsi, si l'absorption se poursuit, la température de la solution s'écoulant dans le conduit 12 décroîtra de Tp, lorsque la solution est pauvre en NH₃, à Tr, lorsqu'elle est riche en NH₃. Cette situation est représentée sur la figure 2 qui est un diagramme de Clapeyron comportant des droites d'équilibre de la solution en fonction de sa concentration, ainsi que la droite d'équilibre entre les phases gazeuse et liquide de l'ammoniac. La durée de la décroissance de température varie en fonction du débit de l'ammoniac de l'évaporateur, donc du flux de chaleur qui y est prélevé. Il est possible d'arrêter la décroissance à une température intermédiaire Tx en fermant la vanne 22, interrompant ainsi la communication entre l'évaporateur et la solution dans le conduit 12.

La température est constante tout au long de la paroi du conduit 12 car le gaz est absorbé de manière uniforme dans la solution. Néanmoins, il faut que la vitesse d'écoulement de la solution dans le conduit 12 soit adaptée à l'échange. De plus, le flux de chaleur local transmis en un point du conduit 12 à l'enceinte 14 doit être identique, ou bien proche, du flux de chaleur local créé par l'absorption du gaz dans la solution.

Un exemple inverse sera maintenant étudié dans lequel on souhaite extraire des calories de l'enceinte, siège, par exemple, d'une réaction exothermique. Un échangeur adapté à cette application est représenté sur la figure 3. Une solution S₂ de H₂O-NH₃ qui a une haute teneur en ammoniac s'écoule le long du conduit 12, du deuxième réservoir 18 vers le premier réservoir 16. En s'écoulant dans le conduit 12, la solution va s'appauvrir en NH₃ et cet ammoniac gazeux va condenser dans le condenseur 24, la vanne 22 étant ouverte. La désorption de l'ammoniac par la solution est une réaction endothermique. Aussi, en fonction de la désorption de l'ammoniac, la température d'échange va croître. Cette situation est représentée sur la figure 4 qui est un diagramme de Clapeyron analogue à celui de la figure 2. La durée de la croissance de la température de Tr à Tp est fonction du débit d'ammoniac vers le condenseur 24. Comme dans l'exemple de la figure 1, il est possible d'arrêter la croissance de la température à une température intermédiaire Tx en fermant simplement la vanne 22 isolant le conduit 12 du condenseur 24.

Ainsi, dans ces deux exemples, le contrôle de la température de la paroi du conduit 12 de l'échangeur s'effectue aisément en variant le débit d'écoulement de la solution H₂O-NH₃ ou ammoniaque dans le conduit 12 et en contrôlant l'ouverture ou la fermeture de la vanne 22.

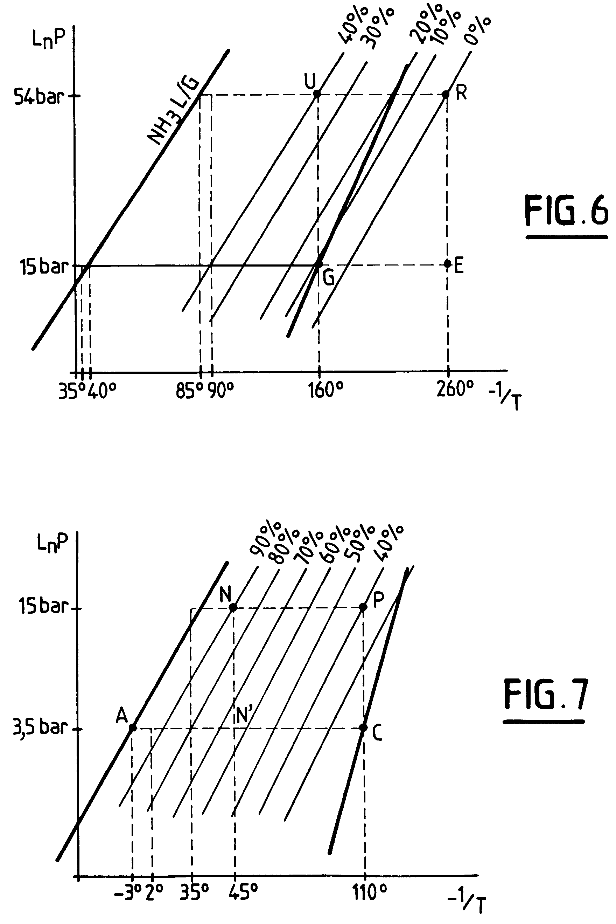

L'échangeur selon l'invention peut également trouver son application dans un système thermochimique à réaction unique que ce soit une synthèse ou une décomposition d'un sel avec un gaz, c'est-à-dire une réaction exothermique ou endothermique. Un tel système est représenté sur la figure 5, le réactif étant du MnCl₂-6NH₃ en phase de décomposition pour former MnCl₂-2NH₃.

Ce système est analogue à celui de la figure 1, une solution S₁ s'écoulant du réservoir 16 vers le réservoir 18 par le conduit 12, s'enrichit en ammoniac provenant de l'évaporateur 20. De l'ammoniac, libéré par la décomposition du réactif R dans l'enceinte 14, passe par un conduit 26 vers un condenseur 28. En dimensionnant les réservoirs 16 et 18, ainsi que les diamètres des conduits, la vanne 22 n'est plus nécessaire, le système étant autorégulant.

Le fonctionnement de ce système est représenté sur la diagramme de Clapeyron de la figure 6. Lors de la décomposition de MnCl₂-6NH₃ en MnCl₂-2NH₃, la condensation de l'ammoniac a lieu à 35°C et sous une pression de 15 bars. La température réelle de condensation est 40°C pour permettre un écart de température ΔT de 5°C au condenseur. La température d'équilibre de MnCl₂ à cette pression est 160°C, point G sur la figure. Afin d'assurer la décomposition du MnCl₂, on fournit de la chaleur en évaporant de l'ammoniac à 90°C qui va s'absorber dans le conduit 12 dans la solution S1 en écoulement. Compte tenu d'un ΔT à l'évaporateur de 5°C, la température d'équilibre de NH₃ est 85°C à une pression de 54 bars. Si la solution est initialement exempte de NH₃ (0 % sur la figure) la première absorption a lieu à 260°C (point R sur la figure). L'absorption se poursuit jusqu'à une composition de 40 % en NH₃ à 160°C (point U sur la figure). On amène ainsi le réacteur en hors équilibre E-G.

Le système de la figure 5 peut fonctionner à l'inverse, lors d'une synthèse du réactif de MnCl₂-2NH₃ en MnCl₂-6NH₂. Ce type de fonctionnement est représenté sur le diagramme de Clapeyron de la figure 7, le système produisant du froid à 2°C, compte tenu du ΔT de 5°C avec la température d'évaporation de -3°C, et à une pression de 3,5 bars. La chaleur produite du niveau 45° (point N' sur la figure) à C, qui est la température d'équilibre du sel, soit à 110°C, est transmise à la solution s'écoulant dans le conduit 12 et permet la décomposition de la solution N à P. Cette solution s'appauvrit en NH₃ de 90 % (point N sur la figure) à 40 % (point P sur la figure).

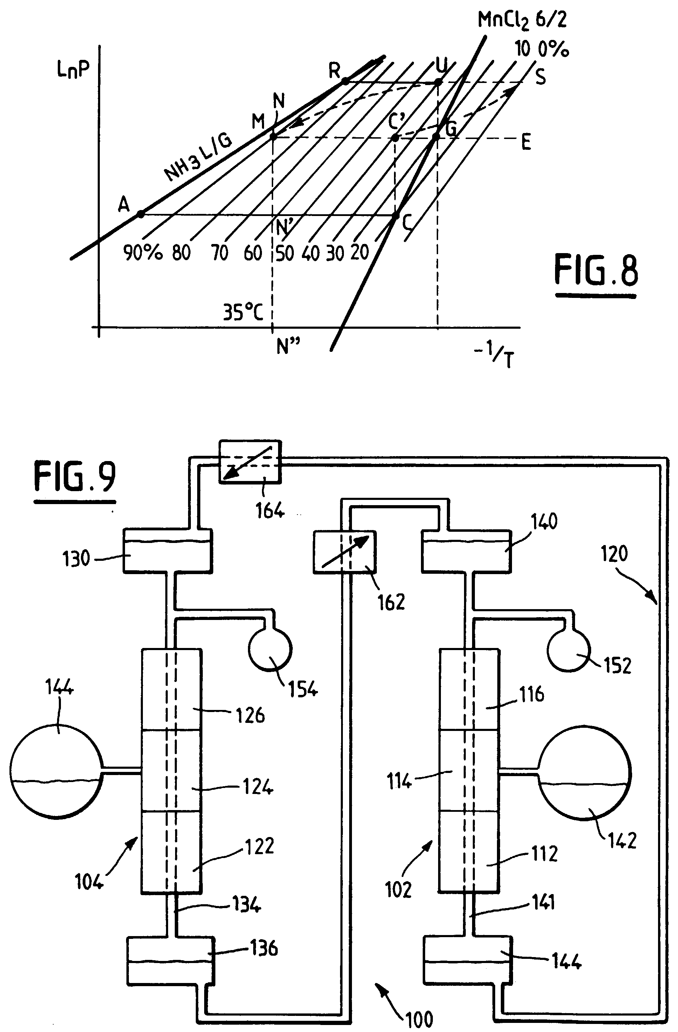

Pendant la phase intermédiaire, représentée sur la figure 8, le réacteur est refroidi de GE à N'C et l'évaporateur, qui est lié à la solution s'écoulant dans le conduit 12, passe du point R au point M. Pour cela, il suffit de laisser cet évaporateur se refroidir en contact avec l'air ambiant à 35°C. En même temps, la solution s'enrichit en ammoniac de 40 % (point U sur la figure) à 90 % (point N). Le réacteur se refroidit à l'air ambiant pour passer de G à C puis à N'. L'ouverture du réacteur sur l'évaporateur 28 placé encore en M conduit à l'équilibre en pression, l'évaporateur se trouvant alors au point A, qui est suivi d'une libération de chaleur du réacteur à partir du point N', ce qui va conduire la solution circulant dans 12 à s'appauvrir en NH₃ du point N au point C'.

L'autre phase intermédiaire de la réaction s'effectue de manière symétrique : le condenseur passe par chauffage de M en R entraînant l'appauvrissement de la solution en NH₃ du point C' au point S.

Afin d'améliorer l'efficacité du système, on peut récupérer de la chaleur du point G au point C, qui sert à chauffer l'évaporateur ainsi que son contenu liquide en l'amenant du point M au point R. Dans le même but, on peut récupérer la chaleur d'absorption du point U au point N afin d'assurer l'évaporation ultérieure en R pour permettre ainsi la production de chaleur de S jusqu'au point U de la solution.

Le coefficient d'échange thermique de l'échangeur de chaleur selon l'invention se compare favorablement à ceux des autres types d'échangeur.

Un fluide caloporteur circulant en régime turbulent dans un échangeur, ce qui nécessite une pompe ayant un débit important, a un coefficient d'échange thermique de l'ordre de 200 à 1000 Wm⁻²k⁻¹ selon la nature, la viscosité et la température du fluide caloporteur et le degré de rugosité de la surface.

Un caloduc présente un coefficient d'échange thermique de 1500 à 5000 Wm⁻²k⁻¹ dû au changement de phase.

L'échangeur de chaleur selon l'invention peut atteindre des coefficients d'échange thermique de l'ordre de 300 à 5000 Wm⁻²k⁻¹.

L'invention trouve aussi une application dans les systèmes thermochimiques appelés "à front de chaleur".

Il est connu que les systèmes à front de chaleur, à adsorption ou à réaction se trouvent limités par le nombre d'unités de transfert NUT que l'on peut transmettre du solide au fluide échangeur pour garantir un front de chaleur acceptable. Dans le cas de la réaction par exemple, NUT est proportionnel à H_{f}S_{f}, h_{sw}S_{sw} et λ_{rad} qui est la conductivité radiale mais inversement proportionnel à m'_{f}(Cp)_{f}
où
h_{f} = coefficient d'échange du fluide caloporteur,
S_{f} = surface d'échange côté fluide caloporteur,
h_{sw} = coefficient d'échange sel-paroi
S_{sw} = surface d'échange sel-paroi
λ_{rad} = conduction radiale du solide
m'_{f} = débit du fluide caloporteur
(Cp)_{f} = capacité thermique du fluide caloporteur.

Pour le bon fonctionnement d'un tel système, il est souhaitable d'avoir h_{f}, h_{sw}, λ grands et m'_{f} Cp_{f} faibles.

L'utilisation d'un échangeur de chaleur de type classique avec un réactif comprenant un support formé de graphite expansé recomprimé conduit à des valeurs importantes de λ_{rad} et h_{sw} qui sont non limitatives. L'obtention d'une valeur élevée de h_{f} implique une valeur élevée de m'_{f}, ce qui est gênant pour le bon fonctionnement du système, NUT restant faible.

Les limitations des échangeurs de chaleur classiques dans ce contexte ont pour résultat que l'on ne peut créer que des puissances très faibles, à savoir de l'ordre de 50W/kg, et cela parce que les systèmes à front de chaleur à adsorption ou à réaction nécessitent un débit faible de fluide caloporteur.

L'échangeur selon l'invention trouve également son application dans des systèmes thermochimiques comprenant au moins deux ensembles de réacteur, chaque ensemble étant muni de blocs de réactif comportant des sels différents associés.

Sur la figure 9 est représenté un système thermochimique 100 formé de deux ensembles de réacteurs 102 et 104. Le premier ensemble 102 comprend trois réacteurs 112, 114 et 116 disposés côte à côte, les trois réacteurs étant agencés afin d'assurer une bonne conductivité thermique entre eux. Un circuit caloporteur 120 est disposé à l'intérieur des réacteurs 112, 114 et 116 les reliant à un deuxième ensemble analogue 104 qui est formé de trois réacteurs 122, 124 et 126. Le circuit caloporteur 120 comprenant deux éléments 134 et 141 selon l'invention, est muni de plus d'un réchauffeur 162 et d'un refroidisseur 164. Le système comprend, de plus, un condenseur 142 et un évaporateur 144 destinés à être reliés sélectivement à l'un ou l'autre des ensembles 102 et 104.

Dans l'exemple illustré, les réacteurs 112 et 126 contiennent du CaCl₂ 8/4NH₃, les réacteurs 114, 124 contiennent du MnCl₂ 6/2 NH₃ et les réacteurs 116, 122 contiennent du NiCl₂ 6/2 NH₃.

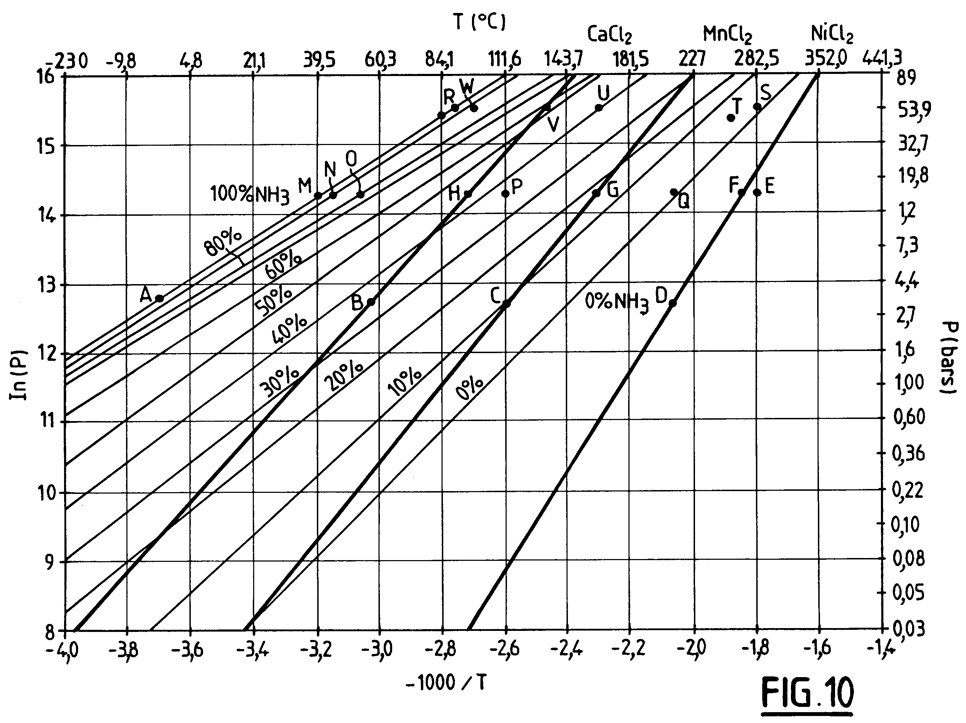

Le fonctionnement de ce système thermochimique sera maintenant étudié en se référant au diagramme de Clapeyron de la figure 10.

Dans la première phase du cycle de fonctionnement, l'ensemble 104 est en phase de synthèse. L'évaporateur 144 se trouve à une pression de 3 bars et à une température de - 3°C. Compte tenu de l'écart de température de 5° C entre l'échangeur et l'évaporation, la température réelle produite est de 2°C (point A sur la figure 10). La température d'équilibre du CaCl₂ contenu dans le réacteur 126 est de 56°C (point B). La chaleur fournie par la synthèse du réactif sert à appauvrir la solution en contact avec ce réacteur de 90 % (point N) à 80 % (point O). L'ammoniac issu de cet appauvrissement de la solution condense dans l'élément 154 à 40°C évacuant de la chaleur vers l'air ambiant à 35°C (point M) à une pression de 15 bars. La température d'équilibre du MnCl₂ dans le réacteur 124 étant de 110°C (point C), la chaleur fournie par la réaction de synthèse continue d'appauvrir la solution s'écoulant dans l'échangeur de 80 % à 38 % (point P). La température d'équilibre du NiCl₂ dans le réacteur 122 est de 220°C (point D) et la chaleur fournie par la réaction de synthèse de ce sel sert à appauvrir la solution de 38 % d'ammoniac jusqu'à 2 % (point Q).

La solution passe, en phase isostérique, sans évolution de composition, du point O au point S, ce qui correspond à une température de 282°C par chauffage en 162.

Dans l'ensemble 102, la solution s'écoulant à travers les réacteurs 112, 114 et 116 est en contact avec l'évaporateur 152 qui se trouve au point R à une température de 85°C et à une pression de 54 bars : elle conduit à décomposer NiCl₂6NH₃ dans le réacteur 112, puis NiCl₂6NH₃ dans le réacteur 114, enfin CaCl₂8NH₃ dans le réacteur 116, après avoir amené NiCl₂6NH₃ du point D sur la figure au point E.

La température d'équilibre du NiCl₂ à 15 bars est de 250°C (point F). L'écart à l'équilibre ΔT est de 32°C. La solution s'écoulant dans l'échangeur évolue ainsi du point S au point T (8 %). Dans la suite du cycle, la solution évolue du point T au point U (40 %) permettant ainsi la décomposition de MnCl₂ dans le réacteur 114 puis du point U au point W (88 %) pour assurer la décomposition du CaCl₂ du réacteur 112.

Le refroidissement de la solution via le refroidisseur 164 fait passer la solution du point W au point N, ce qui correspond à une concentration de 90 %.

Des réservoirs 130, 136, 140 et 144 associés respectivement aux échangeurs 134 et 141 permettent de moduler les débits de solution si nécessaire.

L'inversion du sens de la circulation de la solution permet de placer l'ensemble 104 en phase de désorption, alors relié au condenseur 142, et l'ensemble 102 en phase de synthèse, alors relié à l'évaporateur 144.

A ce fonctionnement en continu peut être substitué un fonctionnement en discontinu ; un seul ensemble, tel 102 et un élément tel 142 sont utilisés. Durant une première phase, 102 est en synthèse, 142 étant un condenseur. Une phase intermédiaire, obtenue en chauffant 142 du point M au point R permet de passer la solution du point O au point S. La deuxième phase implique que 102 est en phase de décomposition, 142 étant l'évaporateur. Le refroidissement de 142 du point R au point M fait passer la solution de W à N, ce qui correspond à une concentration de 90 %. Les chaleurs sensibles des réacteurs sont récupérables pour être utilisées lors de la première phase du cycle. L'inversion du sens de circulation de la solution 120 permet de placer 102 en phase de synthèse (couplé alors avec l'évaporateur 144), et 104 en phase de décomposition (couplé alors avec le condenseur 142), et de réaliser par exemple une production de froid en continu en 142.

Sur la figure 11 est représenté un autre mode de réalisation de l'invention dans lequel, au lieu de comprendre un absorbant liquide, le milieu sorbant d'un gaz comprend un solide adsorbant. Dans cet exemple la chambre 12' contient un solide adsorbant, par exemple une zéolithe qui, de préférence est mélangée avec du graphite expansé, éventuellement recomprimé, afin d'améliorer les transferts de masse et de chaleur du mélange. Un évaporateur/condenseur 20' d'un gaz, qui, de préférence est de la vapeur d'eau, peut être mis sélectivement en communication avec la chambre 12' par l'intermédiaire d'une vanne 22'.

## Revendications

1. Echangeur de chaleur destiné à échanger des calories avec une enceinte (14), l'échangeur comprenant une chambre (12;134;141) contenant un milieu sorbant d'un gaz et en contact thermique avec l'enceinte, la chambre étant sélectivement connectable à un siège d'une évaporation ou d'une condensation du gaz, caractérisé en ce que la chambre (12) comprend un conduit (12) par lequel s'écoule le liquide absorbant entre un premier (16) et un deuxième (18) réservoirs.

2. Echangeur selon la revendication 1 caractérisé en ce que le milieu sorbant comprend un solide adsorbant.

3. Echangeur selon la revendication 1 caractérisé en ce que le milieu sorbant comprend un liquide absorbant.

4. Echangeur selon la revendication 1 caractérisé en ce que le liquide absorbant consiste en NH₄OH, le gaz étant NH₃.
